(19) Europäisches Patentamt
European Patent Office
Office européen des brevets

(11) **EP 2 379 275 B1**

(12) **EUROPÄISCHE PATENTSCHRIFT**

(45) Veröffentlichungstag und Bekanntmachung des Hinweises auf die Patenterteilung:
**06.09.2017 Patentblatt 2017/36**

(21) Anmeldenummer: **09810814.5**

(22) Anmeldetag: **21.12.2009**

(51) Int Cl.:
*B23P 15/00* (2006.01)    *B23B 31/00* (2006.01)
*C21D 1/10* (2006.01)    *C21D 9/00* (2006.01)

(86) Internationale Anmeldenummer:
**PCT/DE2009/001791**

(87) Internationale Veröffentlichungsnummer:
**WO 2010/072207 (01.07.2010 Gazette 2010/26)**

(54) **VERFAHREN ZUR HERSTELLUNG EINES WERKZEUG-SYSTEM-MODULS**

METHOD FOR PRODUCING A TOOL-SYSTEM MODULE

PROCÉDÉ DE FABRICATION D'UN MODULE SYSTÈME-OUTIL

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **23.12.2008   DE 102008062920**

(43) Veröffentlichungstag der Anmeldung:
**26.10.2011   Patentblatt 2011/43**

(73) Patentinhaber: **Gühring KG**
**72458 Albstadt (DE)**

(72) Erfinder:
• **BITZER, Jochen**
**72461 Albstadt-Truchtelfingen (DE)**
• **LANG, Steffen, Klaus**
**72461 Albstadt-Tailfingen (DE)**

(74) Vertreter: **Winter, Brandl, Fürniss, Hübner, Röss, Kaiser, Polte - Partnerschaft mbB Patent- und Rechtsanwaltskanzlei Alois-Steinecker-Strasse 22 85354 Freising (DE)**

(56) Entgegenhaltungen:
**WO-A1-97/10071     US-A- 2 182 799**

• **DIEBOLD: "HSK Werkzeugaufnahmen DIN 69893" Januar 2008 (2008-01), Seiten 1-60, XP002581281 Gefunden im Internet: URL:http://www.damstahl.dk/Default.aspx?ID=117&q=hsk> [gefunden am 2010-05-04]**
• **SANDVIK-Coromant: "Metalworking Products - Rotating Tools" Februar 2001 (2001-02), SANDVIK , SWEDEN , XP002581282 Seite E102**

**Beschreibung**

Die Erfindung betrifft ein Verfahren zur Herstellung eines Werkzeug-System-Moduls, insbesondere eines beispielsweise drehangetriebenen Zerspanungs-Sonderwerkzeugs, bei dem ein zylindrischer Rohling an einem axialen Ende mit einem Kegel-Hohlschaft (HSK), insbesondere einem Kegel-Hohlschaft nach DIN 69893, ausgestattet wird.

Bei der Werkzeugspannung hat sich in jüngerer Zeit die sogenannte HSK-Schnittstelle immer mehr durchgesetzt. Diese Schnittstelle ist in der DIN 69893 genormt und sie zeichnet sich dadurch aus, dass das über die Schnittstelle angeschlossene Werkzeug bzw. der angeschlossene Werkzeug-System-Modul radial besonders exakt positioniert wird und dass zwischen Aufnahme und angeschlossenem Werkzeug-System-Modul besonders hohe Drehmomente übertragen werden können. Dabei entsteht durch die Konstruktion des genormten Kegel-Hohlschafts in Verbindung mit den innerhalb des Kegel-Hohlschafts (HSK) angreifenden Spannelementen über die gesamte Kegelmantelfläche einerseits und die zusätzlich vorgesehene Plananlagefläche ein extrem hoher Reibschluss. In den meisten Fallen - mit Ausnahme der Bauform E nach DIN 69893-5 - greifen zwei Nutensteine am Schaftende der Werkzeugaufnahme in das Werkzeug ein und sorgen auf diese Weise für eine formschlüssige und definierte radiale Positionierung.

Im Vergleich zum herkömmlichen sogenannten "Steilkegel" hat die Hohlschaft-Schnittstelle (HSK), die inzwischen im Bereich der spanenden Bearbeitung eine weite Verbreitung gefunden hat, besondere Vorteile hinsichtlich Genauigkeit, Steifigkeit sowie der Eignung für sehr hohe Drehzahlen, wobei der weitere Vorteil hinzukommt, dass auch schnelle Werkzeugwechsel möglich sind. Aufgrund der besonderen Konstruktionsmerkmale der HSK-Schnittstelle ist jedoch bei der Herstellung genauestens darauf zu achten, dass die Grenzbelastbarkeit im gesamten Einsatzspektrum der Schnittstelle nicht überschritten wird. Dabei kommt erschwerend hinzu, dass beispielsweise dann, wenn der Kegel-Hohlschaft direkt an einem Werkzeug (beispielsweise an einem Werkzeug mit erodiertem oder geschliffenem Plattensitz oder an einem Werkzeug mit gelöteten Schneiden (PKD, CBN, Hartmetall (HM)) ausgebildet ist, nur spezielle Werkstoffe, wie z. B. vergütete oder einsatzgehärtete Stähle verwendet werden können, so dass der herstellungstechnische Aufwand beachtlich werden kann.

Von besonderer Bedeutung ist dabei zusätzlich, dass die Beanspruchung des Kegel-Hohlschafts, insbesondere im Übergangsbereich zum Werkzeugschaft, schon bedingt durch die unterschiedliche Schaftlänge von Werkzeug zu Werkzeug variiert. Je nachdem, welches Werkzeug zur Anwendung kommt, variiert das durch die Schnittkraft hervorgerufene Biegemoment, so dass die Querkraft-Belastbarkeit des Kegel-Hohlschafts in Abhängigkeit von der Auskraglänge der Werkzeugschneiden relativ stark variiert. Auch die Torsionsdauerfestigkeit der Schnittstellen-Konstruktion ist ein wesentliches Kriterium für den Erfolg der Schnittstelle.

Im realen Zerspanprozess wird die Schnittstelle einer dynamischen Anregung unterworfen, welche über einen langen Zeitraum hinweg das übertragbare und ertragbare Torsionsmoment verringert. Es kommt deshalb bei der Herstellung der Komponenten für die HSK-Schnittstelle darauf an, die in Funktionseingriff stehenden Funktionsoberfläche sehr formgenau herzustellen, und zwar auch derart, dass sich über die Lebensdauer der Komponenten keine unzulässigen Formabweichungen ergeben. Aus diesem Grund schreibt die DIN 69893 unter anderem vor, an welchen Stellen eine Härtung der Oberfläche vorgenommen werden muss.

Beim herkömmlichen Herstellungsprozess geht man so vor, dass zunächst ein zylindrischer Rohling aus Werkzeugstahl zur Ausbildung des Kegel-Hohlschafts mit vorbestimmtem Übermaß bearbeitet wird. Dieses Halbzeug wird dann aus dem Zerspanungs-Prozess genommen und - häufig extern - zum Härten gegeben. Die im Bereich des HSK gehärteten Werkstücke werden dann wieder in den zerspanenden Fertigungsprozess eingegliedert und auf Endmaß bearbeitet.

Abgesehen davon, dass dieser Prozess zeit- und kostenintensiv ist, hat sich Folgendes gezeigt:

Es ist bekannt, z.B. aus DIEBOLD:"HSK Werkzeugaufnahmen DIN 69893", das Härteverfahren und die Einhärtetiefe bei Kegel-Hohlschäften (HSK) auf die jeweilige Futter-Type und Größe abzustimmen. Ferner ist es grundsätzlich bekannt, z.B. aus SANDVIK-Coromant: "Metalworking Products - Rotating Tools", Februar 2001, SANDVIK, SCHWEDEN, ausgewählte Bereiche eines HSK-Rohlings induktiv zu härten.

Es kommt hin und wieder vor, dass Kegel-Hohlschäfte im Einsatz des Werkzeugs zu Bruch gehen, wobei die Ursache des Materialversagens in vielen Fällen nicht geklärt werden kann. Ein Problem besteht dabei darin, dass für die Werkzeuge und damit auch für den Kegel-Hohlschaft eine Vielzahl von Werkstoffen verwendet werden müssen und dass dem Bauteil, das nach dem Härten wieder in den Zerspan-Fertigungsprozess eingegliedert wird, die Verteilung des Gefüges über den Querschnitt nicht "angesehen" werden kann. Dementsprechend kann bei der nachfolgenden Endbearbeitung, wie z. B. beim Schleifen der Funktionsoberflächen des Kegel-Hohlschafts, eine thermische Beanspruchung des Werkstoffs erfolgen, die in Bezug auf Dauerfestig- und Rissempfindlichkeit schädlich sein kann.

Der Erfindung liegt deshalb die Aufgabe zugrunde, ein Verfahren zur Herstellung eines Werkzeug-System-Moduls, insbesondere eines beispielsweise spanabhebend arbeitenden Sonderwerkzeugs, bereitzustellen, mit dem es gelingt, den Kegel-Hohlschaft (HSK) mit verbesserter Qualität und Standzeit herzustellen.

Diese Aufgabe wird durch die Merkmale des Patentanspruchs 1 gelöst.

Erfindungsgemäß zeichnet sich das Verfahren dadurch aus, dass zum einen ausgewählte Funktionsbereiche des Kegel-Hohlschafts einem Induktions-Härteverfahren unterzogen werden und zum anderen der Verfahrensschritt des Härtens in die durchgehende Fertigungs-Prozesslinie des Werkzeug-System-Moduls in der Weise integriert wird, dass er im Rahmen einer Komplettbearbeitung, vorzugsweise in einer Aufspannung, erfolgt.

Durch diese Maßnahmen werden nicht nur Zeit und Kosten eingespart. Der besondere Vorteil besteht insbesondere darin, dass Gefüge- bzw. Härtefehler wirksam ausgeschlossen werden können. Es ist durch die Eingliederung in den Fertigungsprozess quasi nicht mehr möglich, den Werkzeugstahl zu verwechseln bzw. Behandlungsfehler zu machen, wie z. B. eine zu geringe oder zu tiefe Einhärtung oder eine Unterhärtung vorzunehmen. Dabei ergibt sich der besondere Vorteil, dass durch das Induktions-Härteverfahren die Einhärtetiefe einerseits, aber auch die Erwärmungstiefe prozessgenau gesteuert werden kann, so dass es gelingt, das Material des Kegel-Hohlschafts für die jeweilige Beanspruchung zu behandeln. Auf diese Weise gelingt es insbesondere, die Rissempfindlichkeit des Gefüges wesentlich zu verbessern, gleichzeitig jedoch auch zu vermeiden, dass Rand-Ab- bzw. -Auskühlungen entstehen. Weil der Schritt des Härtens im Rahmen einer Komplettbearbeitung, vorzugsweise in einer Aufspannung, erfolgt, ergibt sich eine besonders prozesssichere und exakte Bearbeitung Hierdurch werden Vorlaufzeiten verkürzt und es ergibt sich außerdem ein minimaler Platzbedarf und eine einfache Einstellung, Umrüstung und Wartung der Fertigungslinie. Letztlich wird die Zahl der Fehlerquellen beim Herstellungsprozess vermindert. Die spanende Bearbeitung des Werkstücks-Rohlings erfolgt in der Regel materialorientiert. Durch die Integration des Herstellungsprozesses in die Fertigungs-Prozesslinie sind somit Fehler bei der Anpassung des Härtungsprozesses an das jeweils vorliegende Material des Kegel-Hohlschafts weitgehend ausgeschlossen. Da sich darüber hinaus beim InduktionsHärten geringere Verformungen des Werkstücks ergeben, kann das Aufmass des Kegel-Hohlschafts vor dem Härten kleiner gehalten werden als dies bislang erforderlich war. Dies wiederum ergibt die Möglichkeit, die Einhärtungstiefe genauer bis in den 1/10-tel mm-Bereich zu steuern, wodurch tendenziell mehr Querschnitt für die Gestaltung von duktilerem Werkstoffgefüge verbleibt.

Die Grenzbelastbarkeit der HSK-Schnittstellen (Form A, B und C) gemäß DIN 69893-1 und ISO 12164-1 (wie z.B. im VDMA-Einheitsblatt Nr. 34181 angegeben) können auf diese Weise für alle gängigen Durchmesser des HSK (z.B. HSK-A32 bis HSK-A100) bzw. für alle gängigen Werkzeug-Modul- bzw. Werkzeuglängen sicher eingehalten werden.

Zur Integration des Induktionshärtens in dem Fertigungs-Prozess kann es beispielsweise von Vorteil sein, mittels Härte-Robotern zu arbeiten, wie sie beispielsweise bei Anlagen zur induktiven Wärmebehandlung der Firma EFD Induction GmbH, Freiburg im Breisgau, unter der Bezeichnung "HardLine" beschrieben werden. Es ist gleichermaßen möglich, mit Härteprozess-Modul-Einheiten zu arbeiten, wie sie beispielsweise von der Firma Plustherm Point GmbH, Wettingen, Schweiz auf den Markt gebracht worden sind.

Vorteilhafte Weiterbildungen der Erfindung sind Gegenstand der Unteransprüche. beispielsweise von der Firma Plustherm Point GmbH, Wettingen, Schweiz auf den Markt gebracht worden sind.

Besonders gute Ergebnisse lassen sich mit der Weiterbildung des Anspruchs 3 erzielen. Dadurch; dass gewisse Oberflächenbereiche des Kegel-Hohlschafts lediglich einem Randschichthärten unterworfen werden, bleibt das Kerngefüge in diesem Abschnitt weitestgehend unbeeinflusst. Die Werkstücke werden in der sogenannten Härtezone auf Härtetemperatur erwärmt, so dass dort ein gewisser "Wärmestaueffekt" eintritt. Mit anderen Worten, es wird in dieser Härtezone pro Zeiteinheit mehr Energie zugeführt als zur Werkstückmitte hin abfließen kann. Das Kerngefüge kann auf diese Weise unbeeinflusst bleiben, wobei beim Induktionshärten der zusätzliche Vorteil des sogenannten "Skineffekts" ausgenützt wird. Die Energiezuführung durch die Widerstanderwärmung wächst quadratisch mit der Frequenz an, während die Energiezuführung aufgrund der Hystereseverluste linear ansteigt. Mit steigender Frequenz nimmt auch die Stromdichte an der Werkstückoberfläche zu (Skineffekt). Somit ist die Eindringtiefe der Ströme frequenzabhängig. Die bei der Induktionserwärmung pro Zeiteinheit zuführbare Energie ist dabei etwa zehnmal größer als beim Flammhärten, so dass sich die Einhärtetiefe durch die Haltedauer auf Härtetemperatur und mit Zeitverzögerung bis zum Abschrecken in weiten Grenzen variieren lässt.

Durch geeignete Wahl des Wärmeeintrags, dass heißt durch gezielte Steuerung der Parameter des Induktionshärteprozesses unter Berücksichtigung der folgenden Formel für die idealisierte Eindringtiefe des Stroms:

$$\Delta = 503 \cdot \sqrt{\frac{\rho}{\mu_r \cdot f}}\,[mm]$$

mit

$\Delta$ = Eindringtiefe
$\rho$ = spezifischer Widerstand [$\Omega.mm^2/m$]
$\mu_r$ = relative Permeabilität
f = Frequenz [Hz]

lässt sich mit großer Prozessgeschwindigkeit und Prozessgenauigkeit das gewünschte Gefüge an jedem spezifischen Ort des Kegel-Hohlschafts optimal einstellen.

Mit der Weiterbildung des Anspruchs 5 wird der Härteprozess in vorteilhafter Weise mit einer weiteren Behandlung des Werkstoffs kombiniert, um zumindest ausgewählte Bereiche des Kegel-Hohlschafts gefügemäßig an die dort zu erwartende Dauerbeanspruchung anzupassen. Grundsätzlich kann das Induktionshärten nach allen gängigen Verfahren durchgeführt werden, so zum Beispiel nach dem Mantel- oder nach dem Linien-Härte-Verfahren. Beim sogenannten Mantelhärten wird die zu härtende Oberfläche vollständig erwärmt und anschließend abgeschreckt. Beim Linienhärten demgegenüber laufen Heizquelle und Abschreckbrause gekoppelt hintereinander. Es ist aber auch gleichermaßen möglich, mit einem kombinierten Verfahren zu arbeiten. Es kann auch von Vorteil sein, jedem Kegel-Hohlschaft bestimmter Bauart einen eigenen Induktorkopf mit oder ohne integrierter Brauseeinheit zuzuordnen, um die gewünschte Gefügeverteilung zu erzielen.

Als Werkstoff für die Werkzeug-System-Module kann jeder induktionshärtbare Stahl, insbesondere Vergütungsstahl mit ausreichendem Kohlenstoff-Gehalt (vorzugsweise zwischen 0,35 und 0,7%), Werkzeugstahl, rostfreier Stahl oder Wälzlagerstahl verwendet werden. Eine Tabelle geeigneter Stähle findet sich zum Beispiel in dem Aufsatz "Partielle Härte/Randschichthärten lässt Kerngefüge unbeeinflusst" von Dipl. Ing. U. Reese, Bochum; veröffentlicht im Industrieanzeiger Sonderdruck Ausgabe Nr. 83, Seite 52 bis 53. Weitere Materialien sind zum Beispiel Vergütungsstähle folgender Materialbezeichnungen: C45, C35, 42CrMo4, C60, 56NiCrMoV7, X38CrMoV5-1, 16MnCr5, 16MnCrS5, 31CrMoV9, X38CrMoV5-1, Werkzeugstahl nach der Bezeichnung 50NiCr13, aber auch diverse Edelstahlsorten, wie etwa 60MnSiCr4.

Auch für die Induktor-Bauformen kommen verschiedene Möglichkeiten in Frage. So kann beispielsweise mit einem Ringinduktor mit Innenfeld bzw. für das Härten der Innenoberflächen bzw. ausgewählter Bereiche der Innenfläche des Kegel-Hohlschafts mit einem Ringinduktor mit Außenfeld gearbeitet werden. Bereichsweise kann der Härtevorgang auch mittels eines Gesamtflächen-Induktors oder mittels eines Linearinduktors durchgeführt werden.

Die Einhärtetiefe kann innerhalb weiter Grenzen gesteuert werden, und sie liegt vorzugsweise im Bereich zwischen 0,05 und bis zu einigen mm. Der Stahl, der sich für das Induktionshärten eignet, kann auch aus der DIN 17212 gewählt werden.

Aufgrund der Eingliederung in den Fertigungsprozess ergibt sich ein Herstellungsverfahren mit hoher Wiederholungsgenauigkeit, zumal über eine zentzrale Maschinensteuerung alle Prozessgrößen gesteuert werden können. Es ist sogar möglich, in dem Prozess der Herstellung des Kegel-Hohlschafts Prüfverfahren zu integrieren, die im Anschluss an den Härteprozess die Härte ausgewählter Bereiche ermittelt.

Die Erfindung wird nachgehend anhand schematischer Zeichnungen näher erläutert. Es zeigen:

Fig. 1 eine teilweise im Schnitt gezeigte Seitenansicht eines Kegel-Hohlschafts nach DIN 69893-1;

Fig. 2 die Schnittansicht gemäß II-II in Fig. 1;

Fig. 3 die Einzelheit "III" in Fig. 2; und

Fig. 4 - in einer etwas vergrößerten Ansicht - eine schematische TeilSchnittansicht eines Kegel-Hohlschafts nach dem Härtungsprozess.

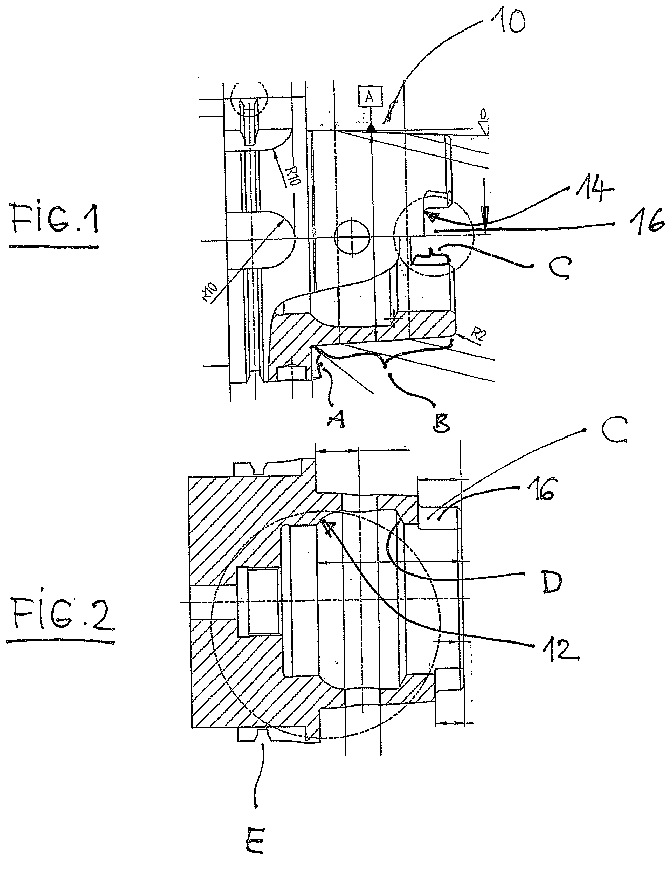

In Fig. 1 ist eine maßstabsgetreue Ansicht eines Kegel-Hohlschafts 10 mit der Bezeichnung HSK-A100 nach DIN 69893-1 (Mai 2003) dargestellt. Der Kegel-Hohlschaft (HSK) ist hier beispielsweise an einem drehangetriebenen Zerspanungswerkzeug mit erodiertem oder geschliffenem Plattensitz mit Spanngewinde, an einem Werkzeug mit gefrästen Plattensitz oder an einem Werkzeug mit gelöteten Schneiden ausgebildet, die von PKD-, CBN oder Hartmetall (HM)-Schneiden gebildet sein können. Es soll jedoch an dieser Stelle bereits hervorgehoben werden, dass der Kegel-Hohlschaft an auch Werkzeughaltern ohne Schneiden oder auch an sogenannten "Grundaufnahmen" wie Flanschen oder Reduzierungen oder Verlängerungen ausgebildet sein kann. Schließlich ist es auch möglich, derartige Kegel-Hohlschäfte (HSK) an Plattenwerkzeugen mit anderen Schäften auszubilden.

In der DIN 69882-1 sind die allgemeinen Anforderungen zum Einwechseln von Werkzeughalter mit Kegel-Hohlschaft nach DIN 69893-1, Form A und Form C in die Arbeitsspindel von Werkzeugmaschinen, wie zum Beispiel Bearbeitungszentren, Dreh-, Bohr-, Fräs- und Schleifmaschinen, festgelegt. Soweit in der betreffenden Produktnorm nicht anders angegeben ist, liegt die Zugfestigkeit des verwendeten Stahls bei mindestens 800 N/mm². Ferner sind die gehärteten Oberflächenabschnitte mit 56 + 4 HRC bzw. 590 + 80 HV30 angegeben.

Die Besonderheit des Kegel-Hohlschafts 10 dieser Bauart besteht darin, dass verschiedene Funktionsoberflächen, die in den Figuren 1 bis 4 mit A, B, C, D und E bezeichnet sind, unterschiedlichen Beanspruchungen unterworfen sind:

An den Radial-Stirnflächen A erfolgt eine feste axiale Plananlage zum Gegenstück der HSK-Schnittstelle. Im Bereich des Außenkonus B liegt der Radial-Flächenkontakt vor, wobei durch das Übermaß zwischen Kegel und Aufnahme eine radiale elastische Vorspannung des Kegelabschnitts auftritt. Im Bereich des Abschnitts C greifen - nicht gezeigte - Nutensteine mit Passung ein, um das maximale übertragbare Drehmoment weiter anzuheben.

Nach DIN 69893-1 müssen mindestens 75% der Spannkraft, die über die - ebenfalls nicht gezeigten - innenliegenden Zangen auf die innenliegende Keilfläche D einwirken, auf die Plananlagefläche A wirken. Schließlich ist im Bereich E, das heißt im Bereich einer Greiferrille, ebenfalls eine bestimmte Oberflächenqualität erforderlich, um Abnutzung durch Werkzeugwechselsysteme klein zu halten.

Sämtliche Funktionsflächen A bis E sind gehärtet auszuführen, um über die Standzeit des Werkzeugs keinen übermäßigen Verschleiß auftreten zu lassen. Allerdings liegt im Bereich der Funktionsflächen A bis D bzw. E ein grundsätzlich unterschiedliches Beanspruchungsprofil vor, so dass es wünschenswert ist, die gehärteten Oberflächen in der Weise auszubilden, dass der dort jeweils vorliegende Querschnitt den Beanspruchungen optimal gewachsen ist.

Spannungsmaxima unter Drehzahleinfluss bilden sich in der Regel im Bereich eines Übergangsradius 12 zwischen Spannschräge und Schaft-Innendurchmesser sowie im Nutgrundradius 14 der tiefen Mitnehmernut 16 aus. Die Grenzdrehzahl der HSK-Schnittstelle wird somit unter anderem von der Länge des tragenden Aufnahmekegels, vom radialen Übermaß zwischen Schaft und Aufnahme sowie von den Abmaßen der Aufnahme und vom jeweils eingesetzten Spansystem bestimmt. Dementsprechend ist es von Fall zu Fall entscheidend, dass der Fertigungsprozess des Kegel-Hohlschafts (HSK) 10 optimal an das betreffende spätere Einsatzgebiet angepasst ist.

Dies gelingt erfindungsgemäß dadurch, dass zumindest ausgewählte Bereiche der Abschnitte A bis E oberflächengehärtet werden, das heißt nach dem Induktions-Härteverfahren. Hierbei arbeitet man mit induziertem Wirbelstrom, der durch ein zeitlich verändertes Magnetfeld im metallischen Werkstoff induziert wird. Die von den Wirbelströmen durchflossenen Bereiche des Werkstücks erwärmen sich aufgrund ihres Ohm'schen Widerstands. Bei Ferromagnetischen Metallen findet zusätzlich eine Erwärmung aufgrund von Hysterese-Verlusten statt. Die Wirbelströme konzentrieren sich mit steigender Frequenz zunehmend auf die Leiteroberfläche (Skineffekt). Aufgrund dieses Skineffekts sowie der Tatsache, dass die Stärke des Magnetfeldes mit zunehmendem Abstand vom Induktor abnimmt, bleiben die Wirbelströme auf eine oberflächennahe Schicht beschränkt, so dass beim Induktionshärten in der Regel nur die Randschicht des Werkstücks auf Härtetemperatur erwärmt.

Mittels geeigneter Magnetfluss-Konzentratoren und geeigneter Gestaltung der Induktoren kann Erwärmung der dem Härteprozess zu unterziehenden Randschicht je nach Bedarf variiert werden. Gleiches gilt für die nachfolgende Abschreckung, das heißt für den anschließenden Wärmeentzug. Nach dem elektroinduktiven Erwärmen der Randschicht auf Härtetemperatur wird diese mittels einer mit Kühlmedium gespülten Brause abgeschreckt. Beim Aufheizen bildet sich aus dem ursprünglich vorliegenden Zementit-Ferrit-Kristallgemisch ein homogener Mischkristall, das Austenit, aus.

Der Kohlenstoff, der im Zementit ($Fe_3C$) gebunden war, ist im Austenit atomar gelöst. Die nachfolgende Abkühlung muss also so schnell erfolgen, dass der Kohlenstoff auch nach der Kristallumwandlung gelöst bleibt und die Umwandlung des Austenits zu Perlit und Ferrit unterdrückt wird, wodurch das Härtungsgefüge Martensit entsteht.

Eine weitere Besonderheit des erfindungsgemäßen Verfahrens besteht darin, den Schritt des Induktions-Härtens in die durchgehende Fertigungs-Prozesslinie des Werkzeugs bzw. des Werkzeug-System-Moduls zu integrieren. Mit anderen Worten, die Materialparameter ebenso wie die Geometrie-Parameter werden in das Prozess-Steuerungssystem eingegeben. Der Härtemodul des Prozesses, beispielsweise in Form eines Roboters mit einem Induktor-Manipulator-Arm, verfügt also über diese systemimmanenten Daten entweder von Anfang an oder durch Datentransfer. Dementsprechend liegen für jedes gerade der Bearbeitung unterliegende Werkstück exakte Werte für das zu erreichende Gefüge an ausgewählten Positionen des Kegel-Hohlschafts fest. Dementsprechend kann der Induktor hinsichtlich Bewegung, Stromstärke und Frequenz einerseits und die die Abschreckbrause hinsichtlich zeitlicher Verzögerung und Kühlleistung andererseits, so gesteuert werden, dass das Ziel-Gefüge an jedem entscheidenden Punkt erreicht wird.

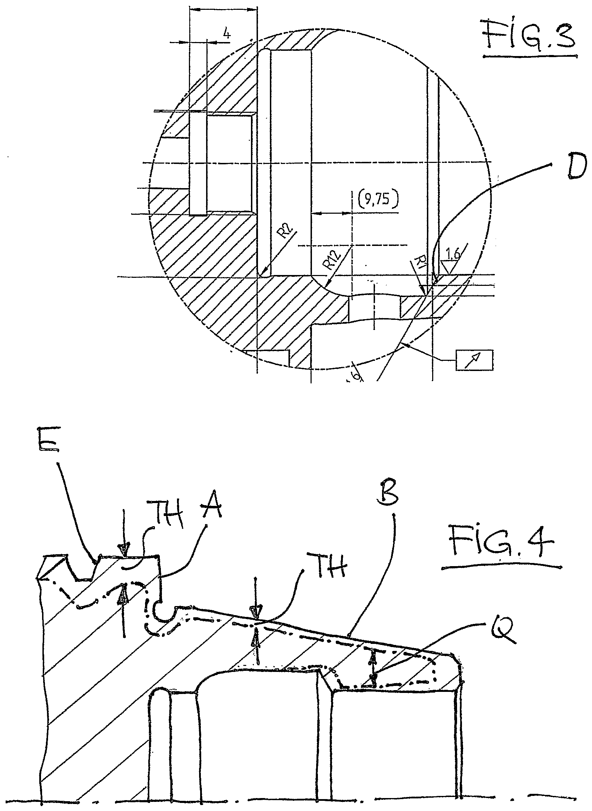

Es gelingt auf diese Weise beispielsweise, die Härtetiefe TH im Bereich der Funktionsoberflächen des Kegel-Hohlschafts wie in Fig. 4 schematisch angedeutet zu steuern. Mit strichpunktierter Linie ist dabei die Grenze zwischen dem gehärteten Gefüge und der wärmeunbeeinflussten Zone gekennzeichnet. Man erkennt, dass sich diese Härtetiefe TH über die Oberfläche des Kegel-Hohlschafts in weiten Grenzen ändern kann. Während sie im Bereich der Greiferrille E verhältnismäßig groß sein kann, liegt sie im Bereich des Außenkegels B lediglich im 1/10-tel mm-Bereich. Im Bereich der Nuten 16 für den Eingriff der - nicht gezeigten - Mitnehmer-Nutensteine kann sie ebenso wie im Bereich der Konusfläche D größer sein, während sie im Bereich des Übergangsradius 12 ganz verschwinden kann.

Mit anderen Worten, der mit dem Doppelpfeil Q in Fig. 4 bezeichnete Bereich des durch den Härteprozess unbeeinflussten Werkstoffgefüges kann entsprechend den individuellen im späteren Einsatz des Werkzeugs zu erwartenden Spannungsverläufen und Belastungs-Gegebenheiten gesteuert werden, um auf diese Weise dort, wo es erforderlich ist, die Duktilität des Werkstoffs voll auszuschöpfen, damit die Standzeit des Werkzeugs bzw. Werkzeug-System-Moduls reproduzierbar angehoben werden kann.

Es liegt auf der Hand, dass sich mit der erfindungsgemäßen Ausgestaltung des Herstellungsverfahrens Prozessfehler minimieren lassen. Weil der Härtevorgang in die Fertigungsprozesslinie eingegliedert ist, sind die Parameter hinsichtlich Geometrie und Werkstoffgefüge zu Beginn des Härtevorgangs bereits im System vorhanden. Übertragungsfehler derartiger Daten sind somit ausgeschlossen. Die Prozesssicherheit beim Härten ist auf diese Weise spürbar angehoben, wobei sich der zusätzliche Vorteil ergibt, dass durch geeignete Messsysteme sogar eine Feinabstimmung des Härtevorgangs auf das jeweils vorliegende Ist-Maß des zu härtenden Werkstücks vorgenommen werden kann.

Selbstverständlich sind Abweichungen von der Ausführungsform möglich, ohne den Grundgedanken der Erfindung zu verlassen. So kann beispielsweise der Härtevorgang mit einem weiteren Wärmebehandlungsschritt kombiniert werden, indem das Gefüge dann gesteuert und an ausgewählten Bereichen zusätzlich beeinflusst wird.

Durch den Einsatz von sogenannten Magnetfluss-Konzentratoren kann dafür gesorgt werden, dass die Wärmeeinbringung in das Material in der Weise erfolgt, dass benachbarte Bereiche möglichst wenig beeinflusst werden. Auf diese Weise lassen sich Gefüge-Rückumwandlungen in weiten Grenzen eliminieren.

Derartige Magnetfluss-Konzentratoren können auch zeitlich gesteuert zum Einsatz kommen, um auf diese Weise - beispielsweise beim Linienhärten - die Axialgeschwindigkeit des Induktors gleich zu halten und damit den Prozess zu vereinfachen. Je nach Einsatzgebiet kann auch die Härtetiefe TH in weiten Grenzen variieren. Sie kann zwischen 0,05 mm bis zu einigen mm liegen.

Anstelle der Durchführung des Härtevorgangs im Rahmen einer Komplettbearbeitung, vorzugsweise in einer Aufspannung, kann das Verfahren auch so durchgeführt werden, dass der Härteprozess in einem Prozess-Modul durchgeführt wird, der dann aber vorzugsweise datentechnisch an die Fertigungsprozesslinie angekoppelt ist.

Es ist auch möglich, im Rahmen des Herstellungsprozesses mit Sensoren zu arbeiten, die die Prozessparameter, insbesondere Temperatur der Werkstückoberfläche, Induktorspannung, Frequenz, Leistung, laufend erfassen und entsprechend einem vorgegebenen Profil regeln.

Die Erfindung schafft somit ein Verfahren zur Herstellung eines Werkzeug-System-Moduls, wie z. B. eines Werkzeugs mit gelöteten Schneiden (PKD, CBN oder Hartmetall), bei dem ein zylindrischer Rohling an einem axialen Ende mit einem Kegel-Hohlschaft (HSK), insbesondere nach DIN 69893, ausgestattet wird. Ausgewählte Funktionsbereiche werden einem Härteverfahren unterzogen. Der Verfahrensschritt des Härtens wird nach dem Induktions-Härteverfahren durchgeführt und in die durchgehende Fertigungsprozesslinie des Werkzeug-System-Moduls integriert.

## Patentansprüche

1. Verfahren zur Herstellung eines Werkzeug-System-Moduls, wie z.B. eines Sonderwerkzeugs oder einer Werkzeugaufnahme, bei dem ein zylindrischer Rohling an einem axialen Ende mit einem Kegel-Hohlschaft (HSK), insbesondere nach DIN 69893, ausgestattet wird, bei dem ausgewählte Funktionsbereiche einem Härteverfahren unterzogen werden, wobei der Verfahrensschritt des Härtens nach dem Induktions-Härteverfahren durchgeführt und in die durchgehende Fertigungs-Prozesslinie des Werkzeug-System-Moduls derart integriert wird, dass er im Rahmen einer Komplettbearbeitung, vorzugsweise in einer Aufspannung, erfolgt.

2. Verfahren nach Anspruch 1, **dadurch gekennzeichnet, dass** zumindest ausgewählte Bereiche des Kegel-Hohlschafts (HSK) dem Verfahren des Randschichthärtens unterworfen werden.

3. Verfahren nach Anspruch 1 oder 2, **dadurch gekennzeichnet, dass** die Einhärtungstiefe (TH) in Abhängigkeit vom Belastungsprofil des jeweiligen an der zu härtenden Stelle des Kegel-Hohlschafts (HSK) vorliegenden Querschnitts gesteuert wird.

4. Verfahren nach einem der Ansprüche 1 bis 3, **dadurch gekennzeichnet, dass** der Verfahrensschritt des Induktionshärtens mit einem weiteren Wärmebehandlungsschritt kombiniert wird.

5. Verfahren nach einem der Ansprüche 1 bis 4, **dadurch gekennzeichnet, dass** der Verfahrensschritt des Induktionshärtens zumindest an ausgewählten Bereichen des Kegel-Hohlschafts (HSK) nach dem Mantelhärteverfahren durchgeführt wird.

6. Verfahren nach einem der Ansprüche 1 bis 5, **dadurch gekennzeichnet, dass** der Verfahrensschritt des Induktionshärtens zumindest an ausgewählten Bereichen des Kegel-Hohlschafts (HSK) nach dem Linienhärteverfahren durchgeführt wird.

7. Verfahren nach einem der Ansprüche 1 bis 6, **dadurch gekennzeichnet, dass** die induktive Erwärmung der zu härtenden Abschnitte des Kegel-Hohlschafts (HSK) unter Verwendung von Magnetfluss-Konzentratoren erfolgt.

## Claims

1. A method for producing a tool system module, such as a special tool or a tool receptacle, in which a cylindrical blank is equipped on one axial end with a hollow taper shank (HSK), in particular according to DIN 69893, in which selected functional areas are subjected to a hardening method, wherein the method step of hardening is performed according to the induction hardening method and is integrated in the continuous manufacturing process line of the tool system module, such that the method step of induction hardening is performed in the scope of complete processing, preferably in a chuck.

2. The method according to Claim 1, **characterized in that** at least selected areas of the hollow taper shank (HSK) are subjected to the method of boundary layer hardening.

3. The method according to Claim 1 or 2, **characterized in that** the hardening depth (TH) is controlled as a function of the strain profile of the respective cross-section provided at the point of the hollow taper shank (HSK) to be hardened.

4. The method according to one of Claims 1 to 3, **characterized in that** the method step of induction hardening is combined with a further heat treatment step.

5. The method according to one of Claims 1 to 4, **characterized in that** the method step of induction hardening is performed according to the sheath hardening method at least on selected areas of the hollow taper shank (HSK).

6. The method according to one of Claims 1 to 5, **characterized in that** the method step of induction hardening is performed according to the line hardening method at least on selected areas of the hollow taper shank (HSK).

7. The method according to one of Claims 1 to 6, **characterized in that** the inductive heating of the sections of the hollow taper shank (HSK) to be hardened is performed using magnetic flux concentrators.

**Revendications**

1. Procédé de fabrication d'un module système-outil, comme par exemple d'un outil spécial ou d'un porte-outil, selon lequel une ébauche cylindrique est équipée à une extrémité axiale d'une tige creuse sphérique (HSK), en particulier selon DIN 69893, selon lequel des zones fonctionnelles sélectionnées sont soumises à un procédé de trempe, l'étape du procédé de trempe étant réalisée selon le procédé de trempe par induction et étant intégrée dans la chaîne de processus de fabrication en continu du module de système d'outil, de manière à être réalisée dans le cadre d'un usinage complet, de préférence en une seule passe.

2. Procédé selon la revendication 1, **caractérisé en ce qu'**au moins des zones sélectionnées de la tige creuse sphérique (HSK) sont soumises au procédé de la trempe superficielle.

3. Procédé selon la revendication 1 ou 2, **caractérisé**

**en ce que** la profondeur de pénétration de trempe (TH) est commandée en fonction du profil de charge de la section transversale présente dans chaque cas à l'emplacement à tremper de la tige creuse sphérique (HSK).

4. Procédé selon l'une quelconque des revendications 1 à 3, **caractérisé en ce que** l'étape de procédé de la trempe par induction est combinée à une autre étape de traitement thermique.

5. Procédé selon l'une quelconque des revendications 1 à 4, **caractérisé en ce que** l'étape de procédé de la trempe par induction est réalisée au moins sur des zones sélectionnées de la tige creuse sphérique (HSK) selon le procédé de trempe par enveloppement.

6. Procédé selon l'une quelconque des revendications 1 à 5, **caractérisé en ce que** l'étape de procédé de la trempe par induction est réalisée sur au moins des zones sélectionnées de la tige creuse sphérique (HSK) selon le procédé de trempe linéaire.

7. Procédé selon l'une quelconque des revendications 1 à 6, **caractérisé en ce que** le chauffage par induction des parties à tremper de la tige creuse sphérique (HSK) est réalisé au moyen de concentrateurs de flux magnétique.

FIG.1

FIG.2

FIG.3

4

(9,75)

R2

R12

R1

16

D

E

TH A

TH

B

FIG.4

Q

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Partielle Härte/Randschichthärten lässt Kerngefüge unbeeinflusst. *Dipl. Ing. U. Reese*

- *Industrieanzeiger Sonderdruck,* 52-53